# EUROPÄISCHE PATENTANMELDUNG

(11) **EP 1 158 475 A2**
(43) Veröffentlichungstag der Anmeldung: **28.11.2001**
(21) Anmeldenummer: 01110298.5
(22) Anmeldetag: 26.04.2001
(51) Int. Cl.: G08C 17/02

(54) **Verfahren zum Übertragen von Telematik-Daten**

(30) Priorität: 23.05.2000 DE 10025059
(71) Anmelder: CarTech Telematic GmbH, 71101 Schönaich (DE)
(72) Erfinder: Ruthe, Andreas, 71134 Aidlingen (DE)
(74) Vertreter: Lindner, Michael, Dipl.-Ing.

(57) **Zusammenfassung**

Die Erfindung betrifft ein Verfahren zur Übertragung von Daten, insbesondere Telematik-Daten über ein GSM-Mobilfunknetz von einem ersten mobilen Teilnehmer (12), dem eine erste Rufnummer zugeordnet ist und der die Telematik-Daten erfaßt, zu einem zweiten Teilnehmer (14), dem eine zweite Rufnummer zugeordnet ist. Das Verfahren kennzeichnet sich dadurch aus, daß der erste Teilnehmer (12) mindestens ein Datenpaket vorgegebener Länge aus den Telematik-Daten ermittelt, wobei das Datenpaket als Durchwahlnummer dient, und die Rufnummer des zweiten Teilnehmers (14) zusammen mit der ermittelten Durchwahlnummer wählt; und daß der zweite Teilnehmer (14) die angewählte Durchwahlnummer erfaßt, daraus die Telematik-Daten ermittelt, zusammen mit der übermittelten ersten Rufnummer speichert, und anschließend eine Verbindung als Empfangsbestätigung für kurze Dauer aufbaut (Fig. 1).

## Beschreibung

Die vorliegende Anmeldung betrifft ein Verfahren zur Übertragung von Daten, insbesondere Telematik-Daten über ein GSM-Mobilfunknetz von einem ersten (mobilen) Teilnehmer, dem eine erste Rufnummer zugeordnet ist und der die Daten, insbesondere Telematik-Daten erfaßt, zu einem zweiten Teilnehmer, dem eine zweite Rufnummer zugeordnet ist. Die Erfindung betrifft des weiteren eine Vorrichtung zur Ausführung dieses Verfahrens.

Verfahren und Systeme zur Übertragung von Telematik-Daten, insbesondere sogenannten GPS-Positionsdaten, sind bekannt. So werden solche Systeme beispielsweise dazu eingesetzt, die Position eines Lkw's an eine Zentrale zu übermitteln, die anhand der Positionsdaten eine Routenplanung erstellen kann. Das Fahrzeug umfaßt hierfür eine GSM-Mobilfunkeinheit sowie einen GPS-Empfänger. Eine mit Mobilfunkeinheit und GPS-Empfänger verbundene Steuereinrichtung wandelt die GPS-Positionsdaten in eine Textinformation um und sendet diese Textinformation unter Zuhilfenahme der sogenannten SMS-Funktion des GSM-Netzes an die Zentrale.

Ein Nachteil dieser Übermittlungsart ist darin zu sehen, daß für jede SMS-Nachricht Gebühren anfallen. Gerade bei häufig zu übermittelnden Positionsdaten fallen hierbei hohe Gebühren an. Ein weiterer wesentlicher Nachteil der SMS-Übermittlung ist darin zu sehen, daß derartige Nachrichten gegenüber den im GSM-Netz übertragenen Sprachsignalen nicht bevorrechtigt sind. D.h., daß die Laufzeit einer SMS vom Fahrzeug zu der Zentrale durchaus einige Zeit benötigen kann, so daß sich eine "Echtzeiterfassung" nicht gewährleisten läßt.

Vor diesem Hintergrund besteht die Aufgabe der vorliegenden Erfindung darin, ein Verfahren und eine Vorrichtung zur Übertragung von Daten vorzusehen, das möglichst geringe Datenübertragungsgebühren verursacht und des weiteren eine sichere und schnelle Datenübertragung gewährleistet.

Diese Aufgabe wird bei dem eingangs genannten Verfahren dadurch gelöst, daß der erste Teilnehmer mindestens ein Datenpaket vorgegebener Länge aus den Telematik-Daten ermittelt, wobei das Datenpaket als Durchwahlnummer dient, und die Rufnummer des zweiten Teilnehmers zusammen mit der ermittelten Durchwahlnummer wählt, und daß der zweite Teilnehmer die angewählte Durchwahlnummer erfaßt, daraus die Telematik-Daten ermittelt, und durch einen Verbindungsaufbau kurzer Dauer den Empfang der Daten dem ersten Teilnehmer bestätigt.

Die vorgenannte Aufgabe wird auch von einem Verfahren der eingangs genannten Art dadurch gelöst, daß der erste Teilnehmer Daten, insbesondere Telematik-Daten erfaßt, ein Datenpaket vorgegebener Länge aus den Daten ermittelt, dieses Datenpaket an die eigene erste Rufnummer anhängt und die zweite Rufnummer wählt, und daß der zweite Teilnehmer die Rufnummer des ersten Teilnehmers zusammen mit dem Datenpaket erfaßt, daraus die Telematik-Daten ermittelt, und durch einen Verbindungsaufbau kurzer Dauer den Empfang der Daten dem ersten Teilnehmer bestätigt.

Der Vorteil beider vorgenannter Verfahren liegt insbesondere darin, daß auf die SMS-Funktion des GSM-Mobilfunknetzes vollständig verzichtet werden kann. Vielmehr werden die Daten direkt bei der Anrufsignalisierung an den zweiten Teilnehmer übertragen. Dabei ist es nicht notwendig, daß der zweite Teilnehmer die Anrufsignalisierung akzeptiert, um danach die Daten übertragen zu können. Der Verbindungsaufbau zwischen dem ersten Teilnehmer und dem zweitem Teilnehmer über das GSM-Netz dient allein dazu, den Datenempfang zu bestätigen. Mit der erfindungsgemäßen Art der Datenübertragung kann somit das Problem der nicht vorhersehbaren Laufzeit von SMS-Nachrichten vermieden werden. Darüber hinaus fallen nur geringe Gebühren für die Datenübertragung an, da eine gebührenverursachende GSM-Verbindung nur für kurze Dauer, bspw. kleiner 1 s aufgebaut wird.

Entsprechend der ersten erfindungsgemäßen Alternative werden die Daten zu einem Datenpaket bestimmter Länge codiert und als Durchwahlnummer an die Rufnummer des zweiten Teilnehmers angehängt. Auf seiten des zweiten Teilnehmers wird bei der Signalisierung des Anrufs festgestellt, daß eine bestimmte Durchwahl angewählt wurde. Diese Durchwahl wird dann gespeichert. Anschließend wird der Empfang der Daten bestätigt, indem eine Verbindung für kurze Dauer aufgebaut wird.

Bei der zweiten erfindungsgemäßen Alternative wird das aus den Daten codierte Datenpaket an die Rufnummer des ersten Teilnehmers angehängt. Da die Rufnummer des ersten Teilnehmers bei der Anrufsignalisierung an den zweiten Teilnehmer über den sogenannten Dienstkanal (D-Kanal beim ISDN-Festnetz) übertragen wird, kann der zweite Teilnehmer diese Information erfassen, und anschließend durch eine kurze Verbindung bestätigen. Auch in diesem Fall fallen folglich nur geringe Gebühren für die Datenübertragung an, da nur eine sehr kurze Verbindung zwischen dem ersten und dem zweiten Teilnehmer zustande kam.

In einer Weiterbildung der Erfindung umfassen die Telematik-Daten Positionsinformationen, vorzugsweise sogenannte GPS-Informationen, die üblicherweise von einem GPS-Empfänger ermittelt werden. Diese GPS-Informationen lassen sich in unterschiedlichster Art und Weise weiter verwerten. So ist es beispielsweise denkbar, anhand der GPS-Informationen Fahrzeugrouten elektronisch zu protokollieren.

In einer bevorzugten Weiterbildung werden die Telematik-Daten in zumindest zwei Datenpakete codiert, die anschließend in nacheinander erfolgenden Anrufsignalisierungen übertragen werden. Vorzugsweise wird bei der Übertragung des ersten Datenpakets eine andere Rufnummer gewählt als bei der Übertragung des zweiten Datenpakets, so daß der zweite Teilnehmer sofort erkennen kann, welches Datenpaket gerade übertragen wird. Vorzugsweise umfaßt das erste Datenpaket die Information der geographischen Breite des ersten Teilnehmers und das zweite Datenpaket die dazugehörende geographische Länge, sowie vorzugsweise eine zusätzliche Statusinformation.

Diese Statusinformation kann beispielsweise die Information enthalten, ob die Fahrt privat oder geschäftlich durchgeführt wird, was bei der Erstellung eines elektronischen Fahrtenbuchs von Bedeutung ist. Selbstverständlich sind auch andere Statusinformationen, wie beispielsweise Überschreiten einer vorgegebenen Geschwindigkeit, Beladezustand des ersten Teilnehmers etc., denkbar.

Die der Erfindung zugrunde liegende Aufgabe wird auch von einer Vorrichtung gelöst, bei der die Steuereinrichtung aus den Daten, insbesondere Telematik-Informationen zumindest ein Datenpaket ermittelt und dieses als Durchwahlnummer an die vorgegebene zweite Rufnummer anhängt, und bei der der zweite Teilnehmer eine Auswerteeinrichtung umfaßt, die die von dem ersten Teilnehmer gewählte Rufnummer erfaßt, daraus das Datenpaket extrahiert, und anschließend eine Verbindung aufbaut.

Diese Vorrichtung weist die bereits im Zusammenhang mit dem obengenannten Verfahren ausgeführten Vorteile auf.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Weitere Vorteile und Ausgestaltungen der Erfindung ergeben sich aus der Beschreibung und der beiliegenden Zeichnung.

Nachfolgend wird anhand von Ausführungsbeispielen unter Bezugnahme auf die Zeichnungen detailliert erläutert. Dabei zeigen:
- Fig. 1: eine schematische Darstellung des gesamten Systems zur Übertragung von Telematik-Daten;
- Fig. 2a: ein schematisches Blockdiagramm einer Übertragungseinheit des ersten Teilnehmers; und
- Fig. 2b: ein schematisches Blockdiagramm einer Empfangs einheit bei dem zweiten Teilnehmer.

Das nachfolgende Ausführungsbeispiel beschreibt die Übertragung von Telematik-Daten. Es versteht sich jedoch, daß daneben auch andere Daten übertragen werden können. Die Erfindung ist nicht auf die Übertragung von Telematik-Daten beschränkt.

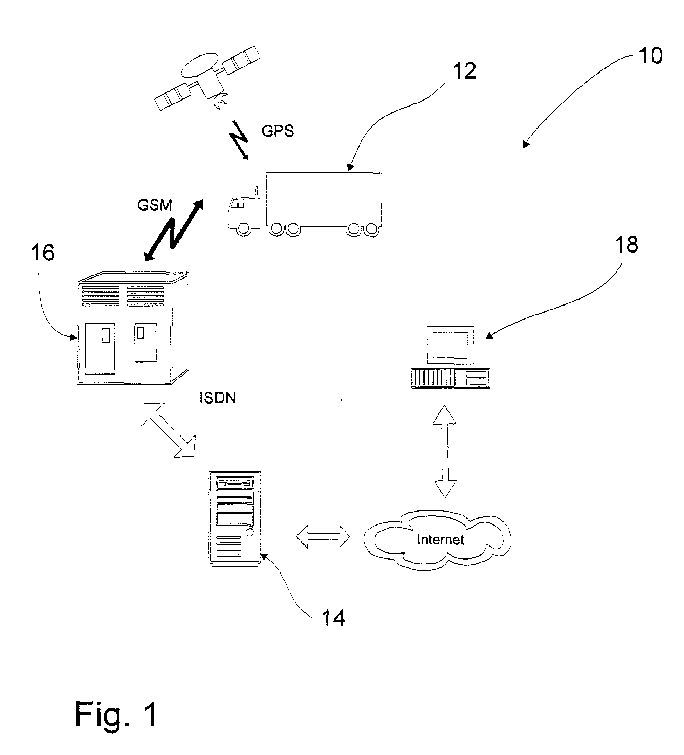

In Fig. 1 ist in schematischer Darstellung ein System zur Übertragung von Telematik-Daten zwischen einem ersten mobilen Teilnehmer und einem zweiten Teilnehmer gezeigt und mit dem Bezugszeichen 10 gekennzeichnet. Das System 10 umfaßt einen mobilen Teilnehmer 12, beispielsweise einen Lkw, und einen stationären Teilnehmer 14, beispielsweise ein Rechenzentrum eines Telematik-Daten verarbeitenden Dienstleisters.

In dem mobilen Teilnehmer 12 ist ein sogenannter GPS-Empfänger eingebaut, der auf bekannte Art und Weise von verschiedenen Satelliten übermittelte Zeitinformationen verarbeitet und daraus eine sehr genaue Positionsangabe berechnet. Diese Positionsangabe gibt die geographische Breite und die geographische Länge an. Der mobile Teilnehmer 12 trägt des weiteren ein GSM-Mobilfunkmodem, das in der Lage ist, eine Telefonverbindung mit dem stationären Teilnehmer 14 herzustellen. Eine solche Verbindung besteht in der Regel aus einer Funkverbindung zwischen dem mobilen Teilnehmer 12 und einer GSM-Vermittlungsstelle 16 und einer Festnetzverbindung, vorzugsweise über das ISDN-Telefonnetz zwischen der GSM-Vermittlungsstelle und dem stationären Teilnehmer 14.

Die vom GPS-Empfänger gelieferten Positionsdaten werden nun mit Hilfe des Systems 10 über das GSM-Funknetz, die GSM-Vermittlungsstelle 16 und das ISDN-Festnetz zu dem stationären Teilnehmer 14 übertragen. Die Positionsdaten werden dann von dem stationären Teilnehmer 14 in vorgegebener Weise weiterverarbeitet, beispielsweise wird ein elektronisches Fahrtenbuch angelegt. Auf die elektronisch verarbeiteten Positionsdaten kann über das Internet von einem Rechner 18 aus zugegriffen werden. Der Rechner 18 steht beispielsweise in einer Spedition, der der Lkw 12 gehört.

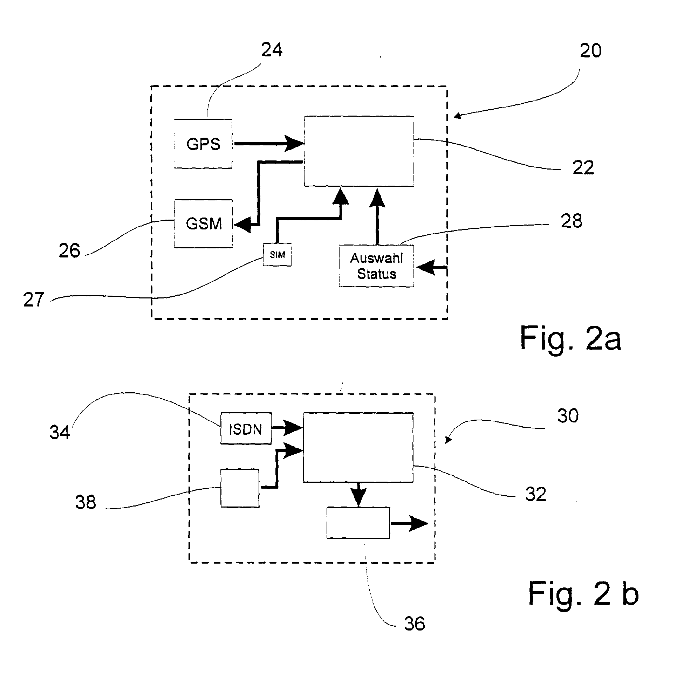

Die Codierung und Übertragung der Telematik-Daten wird nun im folgenden unter Bezugnahme auf die Figuren 2a und 2b erläutert.

In Fig. 2a ist eine Datenübertragungsvorrichtung mit dem Bezugszeichen 20 gekennzeichnet. Diese Datenübertragungsvorrichtung 20 ist in dem mobilen Teilnehmer 12 vorgesehen. Sie umfaßt einen GPS-Empfänger 24, ein GSM-Modem 26, zu dem eine SIM-Karte 27 gehört, sowie eine Auswahleinrichtung 28.

Bei dem stationären Teilnehmer 14 ist eine Empfangsvorrichtung 30 vorgesehen, die eine Steuereinrichtung 32, ein ISDN-Telefonmodul 34 sowie einen Speicher 36 umfaßt. Zusätzlich kann die Empfangsvorrichtung 30 optional über einen weiteren Speicher 38 verfügen, in dem Zusatzinformationen abgelegt sind.

Der GPS-Empfänger 24 liefert der Steuereinrichtung 22 kontinuierlich oder alternativ auf Anforderung GPS-Daten, die die geographische Breite und Länge des momentanen Orts des mobilen Teilnehmers 12 beschreiben. Die Steuereinrichtung 22 erzeugt aus dieser Positionsinformation zwei Datenpakete, die jeweils neun dezimale Stellen umfassen. Das erste Datenpaket enthält die geographische Länge im Format GGG-MM-SSS, wobei GGG für eine dreistellige Grad-Angabe, MM für eine zweitstellige Minuten-Angabe und SSS für eine dreistellige Sekundenangabe (zwei Vorkomma- und eine Nachkomma-Stelle, also SS,S) steht. Im gleichen Format wird auch die geographische Breite im zweiten Datenpaket abgelegt, wobei jedoch eine zweistellige Grad-Angabe GG ausreicht (also GG-MM-SSS). Da beide Datenpakete neun Stellen umfassen, sind beim ersten Datenpaket eine Stelle, vorzugsweise am Anfang, und beim zweiten Datenpaket zwei Stelle frei, vorzugsweise am Ende, die für die Übermittlung zusätzlicher Informationen genutzt werden können. Die frei Stelle im ersten Datenpaket wird dazu genutzt, die Information Nord/Süd/Ost/West für die Längen- und Breitengradangabe zu codieren. Insgesamt sind vier Kombinationen möglich, nämlich Nord und Ost, Nord und West, Süd und Ost oder Süd und West, so daß insgesamt vier unterschiedliche Ziffern zur Codierung dieser Information genügen. Darüber hinaus enthält diese Stelle die Information, ob es sich um GPS-Daten handelt oder ob andere Telematik-Daten übertragen werden. Neben der Information Nord/Süd/Ost/West lassen sich auch andere Informationen übertragen, bspw. die Anzahl der noch folgenden Datenpakete, wenn die zu übertragenden Telematik-Daten mehrere Datenpakete umfassen.

Die beiden freien Stellen des zweiten Datenpakets können zur Übermittlung zusätzlicher Statusinformationen genutzt werden. Eine Statusinformation wäre beispielsweise die Angabe, ob der Lkw 12 beladen oder unbeladen unterwegs ist. Selbstverständlich sind auch andere Informationen denkbar.

Nachdem die beiden Datenpakete codiert sind, wird das GSM-Modem 26 angesteuert, um eine vorgegebene Rufnummer, die in der Steuereinrichtung 22 abgelegt ist, anzuwählen. An diese Rufnummer, die dem zweiten Teilnehmer 14 zugeordnet ist, wird zusätzlich das erste Datenpaket als "Durchwahlnummer" angehängt. Das GSM-Modem 26 wählt damit eine Nummer, die sich aus der vorgegebenen Rufnummer des zweiten Teilnehmers 14 und dem ersten Datenpaket zusammensetzt.

Der Anruf wird in bekannter Weise dem zweiten Teilnehmer 14 unter anderem über den D-Kanal des ISDN-Netzes signalisiert, wobei der zweite Teilnehmer 14 einerseits die Information erhält, welche Durchwahlnummer gewählt ist, und andererseits die Information erhält, welche Rufnummer dem ersten Teilnehmer 12 zugeordnet ist. Diese Informationen werden von dem ISDN-Telefonmodul 34 der Empfangsvorrichtung 30 an die Steuereinheit 32 übermittelt und dort wie nachfolgend noch erläutert weiterverarbeitet. Das ISDN-Telefonmodul 34 wird nun nach Erhalt der vorgenannten Informationen einen Verbindungsaufbau zwischen dem ersten und dem zweiten Teilnehmer 12, 14 für kurze Zeit durchführen, um auf diese Weise dem ersten Teilnehmer 12 mitzuteilen, daß die Daten empfangen wurden. Der kurze Verbindungsaufbau hat den positiven Effekt, daß nur geringe Gebühren für eine Mobilfunkverbindung zwischen dem ersten Teilnehmer 12 und dem zweiten Teilnehmer 14 entstehen, obgleich Informationen zwischen den beiden Teilnehmern übermittelt wurden. Diese übermittelten Informationen sind jedoch Bestandteil des Anrufsignalisierungsprotokolls und damit keine Daten im gebührenpflichtigen Nutzkanal (A- oder B-Kanal im ISDN-Netz).

Die Steuereinheit 32 wird anschließend aus den erfaßten Daten, die die vorgegebene Rufnummer sowie das Datenpaket umfassen, das Datenpaket extrahieren und zusammen mit weiteren Zusatzinformationen, beispielsweise Datum/Zeit und der Rufnummer des mobilen Teilnehmers 12, im Speicher 36 ablegen.

Das vorgenannte Verfahren wird im Anschluß daran noch einmal ausgeführt, um auch das zweite Datenpaket an den Teilnehmer 14 zu übermitteln. Vorzugsweise wird die Steuereinrichtung 22 der Datenübertragungsvorrichtung 20 das zweite Datenpaket an eine andere Rufnummer für den zweiten Teilnehmer 14 anhängen, so daß dort eine eindeutige Zuordnung möglich wird. Ansonsten gestaltet sich die Übertragung und Auswertung des zweiten Datenpakets analog zu der des ersten Datenpakets.

Sobald die Steuereinheit 32 beide Datenpakete empfangen und gespeichert hat, können auf der Grundlage der vollständigen Positionsangabe nun weitere Zusatzinformationen aus dem zusätzlichen Speicher 38 geholt werden, wie beispielsweise Straßennamen, Ortsnamen etc., die dann zusammen mit der Positionsangabe im Speicher 36 abgelegt werden.

Anhand eines konkreten Beispiels soll das obengenannte Verfahren nochmals kurz erläutert werden. Ausgangspunkt ist eine Position des mobilen Teilnehmers 12 von 48 Grad 7 Minuten 38,0 Sekunden östliche Länge und 11 Grad 31 Minuten 32,4 Sekunden nördliche Breite. Das erste Datenpaket umfaßt damit die folgenden Ziffern: "048-07-380", wobei noch eine Stelle, bspw. am Anfang frei ist. Das zweite Datenpaket umfaßt die Ziffern "11-31-324", wobei hier noch zwei Stellen, bspw. am Ende frei sind.

Die Information "nördliche Breite" und "östliche Länge" wird entsprechend der folgenden Tabelle codiert:
9 = Nord + Ost
8 = Nord + West
7 = Süd + Ost
6 = Süd + West

Damit wird die Ziffer "9" dem achtstelligen Code des ersten Datenpakets vorgestellt, das damit wie folgt lautet: "9-048-07-380".

Die letzten Stellen des zweiten Datenpakets können zur Übertragung von Statusinformationen dienen, wie beispielsweise die Angabe, ob der mobile Teilnehmer 12 beladen (0) oder unbeladen (1) fährt. Im vorliegenden Fall soll die Statusinformation (00) sein, so daß das zweite Datenpaket lautet: "11-31-324-00". Diese Statusinformation wird von der Auswahleinrichtung 28 geliefert, der beispielsweise Sensorsignale, Schaltersignale etc. zugeführt sind.

Nachdem die beiden Datenpakete ermittelt sind, wird die Steuereinrichtung 22 an die fest vorgegebene Rufnummer des zweiten Teilnehmers, im vorliegenden Ausführungsbeispiel (0511) 3347-123, das erste Datenpaket "9-048-07-380" anhängen. Anschließend wird das GSM-Modem angesteuert, um die aus Rufnummer und Datenpaket zusammengesetzte Rufnummer zu wählen, also "0511/3347-123-9-48-07-380". Dieser Anruf wird über das GSM-Netz und das ISDN-Netz dem zweiten Teilnehmer 14, dem die Rufnummer 0511/3347-123 zugeordnet ist, signalisiert. Über das Zeichengabenetz (SS7) und den Zeichengabekanal des ISDN (D-Kanal) erhält der zweite Teilnehmer 14 die gewählte Rufnummer übermittelt, also 0511-3347-123-9-048-07-380 sowie die dem ersten Teilnehmer 12 zugeordnete Rufnummer, beispielsweise 01781234567.

Die Steuereinheit 32 der Empfangsvorrichtung 30 wird das Datenpaket aus der übermittelten Rufnummer extrahieren und zusammen mit der Rufnummer und weiteren Zusatzinformationen im Speicher 36 ablegen. Dabei erkennt die Steuereinheit 32 anhand der ersten Ziffer des Datenpakets, ob es sich um GPS-Daten handelt (Ziffern 9-6) oder ob es sich um andere Telematik-Daten handelt, die keine (Ziffer 0) oder weitere (Ziffern 1-5) Datenpakete umfassen.

Das zweite Datenpaket wird in entsprechender Weise übermittelt, wobei die Steuereinrichtung 22 der Datenübertragungsvorrichtung 20 vorzugsweise jedoch eine andere, ebenfalls dem stationären Teilnehmer 14 zugeordnete Rufnummer auswählt, nämlich im vorliegenden Ausführungsbeispiel (0511) 3347-124. Damit wird das GSM-Modem 26 folgende Nummer wählen: 0511/3347-124-11-31-324-00. Die Verarbeitung der Rufnummer und des zweiten Datenpakets erfolgt auf der Empfängerseite in analoger Weise. Selbstverständlich kann auch das zweite Datenpaket über die gleiche Rufnummer wie das erste Datenpaket übermittelt werden.

Nachdem beide Datenpakete auf der Empfängerseite im Speicher 36 abgelegt sind, können die entsprechenden Daten zu einem einzigen Datensatz zusammengefaßt und mit Zusatzinformationen ergänzt werden. Derartige Zusatzinformationen können beispielsweise den Namen des Ortes und der Straße des aktuellen Standorts des mobilen Teilnehmers 12 umfassen, so daß die Informationen leichter lesbar sind.

Regelmäßige in vorgegebenen Zeitperioden übermittelte Positionsinformationen erlauben eine exakte Protokollierung der von dem mobilen Teilnehmer 12 gefahrenen Route, so daß ohne weiteres beispielsweise ein elektronisches Fahrtenbuch auf der Grundlage dieser an den stationären Teilnehmer 14 übermittelten Daten erstellt werden kann und sich bspw. über das Internet abrufen läßt. Selbstverständlich lassen sich die Positionsdaten auch in anderer Art und Weise nutzen. Darüber hinaus ist das vorbeschriebene Verfahren zur Übertragung von Telematik-Daten nicht auf die Übertragung von Positionsinformationen beschränkt. Denkbar sind beispielsweise auch Daten über den Zustand eines Fahrzeugs, Informationen über die Beladung, Fahrtzeit etc. Da nach dem ITU-Standard grundsätzlich Telefonnummern mit einer Länge von bis zu 20 Stellen verarbeitet werden können, lassen sich bei einer beispielsweise siebenstelligen Rufnummer weitere 13 Stellen zur Datenübertragung nutzen.

Das obengenannte Verfahren läuft sendeseitig automatisch ab, so daß eine Betätigung oder ein Eingriff des den Lkw steuernden Fahrers nicht notwendig ist. Die Zeitdauer zwischen der Übertragung zweier Positionsinformationen ist üblicherweise fest eingestellt, läßt sich aber bei Bedarf jederzeit ändern. Auch eine ferngesteuerte Änderung durch den zweiten Teilnehmer 14 über das GSM-Mobilfunknetz wäre denkbar. Darüber hinaus läßt sich das vorgenannte Verfahren selbstverständlich auch in umgekehrter Richtung, d.h. vom stationären Teilnehmer 14 zum mobilen Teilnehmer 12, betreiben, so daß auch in diese Richtung Daten übertragen werden können.

Neben der zuvor erläuterten bevorzugten Ausführungsform besteht eine weitere Möglichkeit der Datenübertragung zwischen dem ersten mobilen Teilnehmer 12 und dem zweiten stationären Teilnehmer 14 darin, die Datenpakete an die Rufnummer des mobilen Teilnehmers 12 anzuhängen. Die Rufnummer des mobilen Teilnehmers 12 ist in der SIM-Karte 27 abgelegt und wird ebenfalls bei einer Anrufsignalisierung an den stationären Teilnehmer 14 übertragen. Die Steuereinrichtung 22 der Datenübertragungsvorrichtung 20 unterscheidet sich in dieser alternativen Ausführungsform dadurch, daß sie das Datenpaket nicht an die Rufnummer des stationären Teilnehmers 14 sondern an die aus der SIM-Karte ausgelesene Rufnummer anzuhängen hat. Das GSM-Modem 26 wählt in diesem Fall gegenüber der ersten Ausführungsform lediglich die Rufnummer des zweiten Teilnehmers ohne Durchwahlnummer.

Der Steuereinheit 32 kommt bei dieser Ausführungsform dann die Aufgabe zu, das Datenpaket aus der Rufnummer des mobilen Teilnehmers 12 zu extrahieren. Anschließend wird es ebenfalls im Speicher 36 abgelegt.

Es zeigt sich somit, daß die beiden vorgenannten erfindungsgemäßen Verfahren eine Datenübertragung von einem mobilen Teilnehmer zu einem stationären Teilnehmer erlauben, bei dem keine Gesprächsgebühren anfallen. Der Grund liegt darin, daß die Daten nicht im Nutzkanal (Sprachkanal) übertragen werden, sondern vielmehr im Zeichengabenetz (SS7) bzw. im Zeichengabekanal des ISDN-Kanals.

Da darüber hinaus die Daten im "Schlepptau" einer Anrufsignalisierung übermittelt werden, kommt es im allgemeinen nicht zu Laufzeitverzögerungen der zu übertragenden Daten. Damit ist der Nachteil der SMS-Datenübertragung, bei der es zu erheblichen Laufzeitverzögerungen kommen kann, überwunden, ohne jedoch hierfür zusätzliche Kosten in Kauf nehmen zu müssen.

## Patentansprüche

1. Verfahren zur Übertragung von Daten, insbesondere Telematik-Daten über ein GSM-Mobilfunknetz von einem ersten mobilen Teilnehmer (12), dem eine erste Rufnummer zugeordnet ist und der die Daten erfaßt, zu einem zweiten Teilnehmer (14), dem eine zweite Rufnummer zugeordnet ist, **dadurch gekennzeichnet, daß**
der erste Teilnehmer (12) mindestens ein Datenpaket vorgegebener Länge aus den Daten ermittelt, wobei das Datenpaket als Durchwahlnummer dient, und die Rufnummer des zweiten Teilnehmers (14) zusammen mit der ermittelten Durchwahlnummer wählt; daß
der zweite Teilnehmer (14) die angewählte Durchwahlnummer erfaßt, daraus die Telematik-Daten ermittelt und zur Weiterverarbeitung vorzugsweise zusammen mit der übermittelten ersten Rufnummer speichert, und daß der zweite Teilnehmer eine Ruf-Verbindung zum ersten Teilnehmer für kurze Dauer als Empfangsbestätigung aufbaut.

2. Verfahren zur Übertragung von Daten, insbesondere Telematik-Daten von einem ersten mobilen Teilnehmer (12), dem eine erste Rufnummer zugeordnet ist und der die Daten erfaßt, zu einem zweiten Teilnehmer (14), dem eine zweite Rufnummer zugeordnet ist, **dadurch gekennzeichnet, daß**
der erste Teilnehmer (12) ein Datenpaket vorgegebener Länge aus den Telematik-Daten ermittelt, dieses Datenpaket an die eigene erste Rufnummer anhängt, und die zweite Rufnummer wählt; und daß
der zweite Teilnehmer (14) die Rufnummer des ersten Teilnehmers zusammen mit dem Datenpaket erfaßt, daraus die Telematik-Daten ermittelt, insbesondere zusammen mit der ersten Rufnummer speichert, und anschließend eine Verbindung zu dem ersten Teilnehmer für kurze Dauer als Empfangsbestätigung aufbaut.

3. Verfahren nach Anspruch 1 oder 2, **dadurch gekennzeichnet, daß** die Telematik-Daten Positionsinformationen, vorzugsweise GPS-Informationen des ersten Teilnehmers (12) umfassen.

4. Verfahren nach einem der vorhergehenden Ansprüche, **dadurch gekennzeichnet, daß** die Telematik-Daten vor dem Verbindungsaufbau zwischen dem ersten und dem zweiten Teilnehmer (12, 14) übertragen werden.

5. Verfahren nach einem der vorhergehenden Ansprüche, **dadurch gekennzeichnet, daß** zwei Datenpakete vorgegebener Länge ermittelt werden, und daß der erste Teilnehmer (12) den zweiten Teilnehmer (14) zweimal anwählt und dabei das erste und dann das zweite Datenpaket übermittelt.

6. Verfahren nach Anspruch 3, **dadurch gekennzeichnet, daß** der zweite Teilnehmer (14) abhängig von den Positionsinformationen den momentanen Standort des ersten Teilnehmers (12) ermittelt und diese Information in einem elektronischen Fahrtenbuch zusammen mit einem Datum/Zeitstempel ablegt.

7. Verfahren nach einem der vorhergehenden Ansprüche, **dadurch gekennzeichnet, daß** jedes Datenpaket eine Länge von zumindest neun Stellen aufweist, und daß das erste Datenpaket die geographische Länge und das zweite Datenpaket die geographische Breite des ersten Teilnehmers (12) umfaßt, und daß der zweite Teilnehmer (14) die beiden Datenpakete zu einer gemeinsamen Positionsinformation zusammensetzt.

8. Verfahren nach einem der vorhergehenden Ansprüche, **dadurch gekennzeichnet, daß** zumindest ein Datenpaket neben der Positionsinformation eine Statusinformation umfaßt.

9. Verfahren nach Anspruch 7, **dadurch gekennzeichnet, daß** dem zweiten Teilnehmer (14) zwei unterschiedliche zweite Rufnummern zugeordnet sind, und daß der erste Teilnehmer zur Übertragung von zwei Datenpaketen die eine zweite Rufnummer zur Übertragung des ersten Datenpakets und die andere zweite Rufnummer zur Übertragung des zweiten Datenpakets wählt.

10. Verfahren nach einem der vorhergehenden Ansprüche, **dadurch gekennzeichnet, daß** die Rufnummer des ersten Teilnehmers (12) über das Zeichengabenetz (SS7) und den Zeichenkanal (D-Kanal) eines ISDN-Netzes zum zweiten Teilnehmer (14) übertragen wird.

11. Vorrichtung zur Übertragung von Daten, wobei der erste Teilnehmer (12) eine Einrichtung (24) zur Erfassung von Daten, insbesondere Telematik-Informationen, vorzugsweise einen GPS-Empfänger, und eine Steuereinrichtung (22) umfaßt, **dadurch gekennzeichnet, daß** die Steuereinrichtung aus den erfaßten Daten, insbesondere Telematik-Informationen zumindest ein Datenpaket ermittelt und dieses als Durchwahlnummer an die vorgegebene zweite Rufnummer anhängt; und daß der zweite Teilnehmer (14) eine Auswerteeinrichtung (32) umfaßt, die die von dem ersten Teilnehmer gewählte Rufnummer erfaßt, daraus das Datenpaket extrahiert, und anschließend einen Verbindungsaufbau für kurze Dauer veranlaßt.

12. Vorrichtung nach Anspruch 11, **dadurch gekennzeichnet, daß** der erste Teilnehmer (12) eine GSM-Mobilfunkeinheit (26) und der zweite Teilnehmer eine ISDN-Festnetzeinheit (34) aufweist.

13. Vorrichtung nach Anspruch 11 oder 12, **dadurch gekennzeichnet, daß** bei dem ersten Teilnehmer (12) ein Auswahlmittel (28) vorgesehen ist, mit dem eine zu übertragende Statusinformation auswählbar ist.

14. Vorrichtung zur Ausführung des Verfahrens nach Anspruch 2, wobei der erste Teilnehmer (12) eine Einrichtung (24) zur Erfassung von Daten, insbesondere Telematik-Informationen, vorzugsweise einen GPS-Empfänger, und eine Steuereinrichtung (22) umfaßt, **dadurch gekennzeichnet, daß** die Steuereinrichtung aus den erfaßten Daten, insbesondere Telematik-Informationen zumindest ein Datenpaket ermittelt und dieses an die eigene Rufnummer anhängt; und daß der zweite Teilnehmer eine Auswerteeinrichtung (32) umfaßt, die die von dem ersten Teilnehmer bei der Anrufsignalisierung übertragene zusammengesetzte erste Rufnummer erfaßt, daraus das Datenpaket extrahiert, und anschließend einen Verbindungsaufbau für kurze Dauer veranlaßt.

15. Vorrichtung nach Anspruch 14, **dadurch gekennzeichnet, daß** die erste Rufnummer in einer SIM-Karte (27) abgelegt ist.

16. Vorrichtung nach Anspruch 14 oder 15, **dadurch gekennzeichnet, daß** dem zweiten Teilnehmer (14) mehrere Rufnummern zugeordnet sind, und daß der erste Teilnehmer (12) die zweite Rufnummer abhängig von der Länge der ersten Rufnummer auswählt, so daß der zweite Teilnehmer (14) abhängig von der gewählten Rufnummer die übermittelte erste Rufnummer von dem Datenpaket trennt.
